**Europäisches Patentamt**

**European Patent Office**

**Office européen des brevets**

(19)

(11) Veröffentlichungsnummer: **0 352 470**
**A2**

(12) # EUROPÄISCHE PATENTANMELDUNG

(21) Anmeldenummer: **89111189.0**

(22) Anmeldetag: **20.06.89**

(51) Int. Cl.⁴: **F23C 6/04 , F23C 9/00 , F23L 15/04**

(30) Priorität: **26.07.88 DE 3825291**

(43) Veröffentlichungstag der Anmeldung:
**31.01.90 Patentblatt 90/05**

(84) Benannte Vertragsstaaten:
**DE GR SE**

(71) Anmelder: **Vereinigte Kesselwerke Aktiengesellschaft**
**Postfach 8240 Werdener Strasse 3**
**D-4000 Düsseldorf 1(DE)**

(72) Erfinder: **Breucker, Hans**
**Kruppstrasse 41**
**D-4000 Düsseldorf(DE)**
Erfinder: **Kessel, Walter**
**Kirchplatz 6**
**D-5012 Königshoven(DE)**

(74) Vertreter: **Planker, Karl-Josef, Dipl.-Phys.**
**c/o Deutsche Babcock Anlagen AG**
**Parkstrasse 29 Postfach 4 + 6**
**D-4150 Krefeld 11(DE)**

(54) **Verfahren und Feuerungsanlage zur Verbrennung fossiler Brennstoffe unter reduzierter Bildung von Stickoxiden.**

(57) Die Erfindung betrifft eine Maßnahme zur Reduzierung der $NO_x$-Emission durch Beeinflussung der Verbrennungsprozesse im Feuerraum größerer Feuerungsanlagen. Bekannte Maßnahmen sind die Luftstufung ("Over-Fire-Air"), die eine Temperatursenkung im gesamten Feuerraum zur Folge hat, und die Brennstoffstufung ("In-Furnace-$NO_x$-Reduction"). Aufgabe der Erfindung ist, die $NO_x$-Emission weiter ohne die Nachteile des Standes der Technik zu reduzieren. Dazu wird die $NO_x$-Emission durch gezielte Absenkung des Temperaturmaximums im Feuerraum möglichst gering gehalten, wobei die wesentlichen Maßnahmen eine stufenweise Zufuhr von Brennstoff und/oder Rauchgas in den Brennerebenen sind.

EP 0 352 470 A2

Figur 1

## Verfahren und Feuerungsanlage zur Verbrennung fossiler Brennstoffe unter reduzierter Bildung von Stickoxiden

Die Erfindung betrifft ein Verfahren gemäß den Oberbegriffen der Ansprüche 1 und 2 und eine zur Durchführung des Verfahrens gemäß Anspruch 6 bestimmte Feuerungsanlage gemäß dem Oberbegriff des Anspruchs 18 und eine zur Durchführung des Verfahrens gemäß Anspruch 4 bestimmte Feuerungsanlage gemäß dem Oberbegriff des Anspruchs 19.

Bei der Verbrennung fossiler Brennstoffe zur Dampferzeugung entstehen Stickstoffoxide ($NO_x$).

Die gesetzlichen Bestimmungen zur Reinhaltung der Luft lassen eine $NO_x$-Emission nur in engen Grenzen zu, so daß Maßnahmen zur Steuerung des Verbrennungsprozesses derart, daß nur wenig $NO_x$ entsteht, erforderlich sind.

Die Bildung von $NO_x$ unterliegt komplexen Reaktionsmechanismen, wobei die beiden größten $NO_x$-Quellen die Oxidation des Stickstoffs der Verbrennungsluft (thermisches $NO_x$) und die Oxidation des Brennstoffstickstoffs (Brennstoff-$NO_x$) sind.

Thermisches $NO_x$ entsteht im wesentlichen bei Temperaturen, die größer sind als etwa 1200 bis 1500 °C, weil erst bei diesen Temperaturen der in der Luft vorhandene molekulare Sauerstoff merklich in atomaren Sauerstoff (thermische Oxidation) übergeht und sich mit dem Stickstoff der Luft verbindet. Die Bildungsrate des thermischen $NO_x$ hängt exponentiell von der Temperatur ab und ist proportional zur Sauerstoffkonzentration.

Die im Brennstoff enthaltenen primären Stickstoffverbindungen zerfallen zunächst in sekundäre Stickstoffverbindungen (einfache Amine und Cyanide), die im Verlauf der Verbrennung konkurrierend entweder zu $NO_x$ oder zu $N_2$ umgewandelt werden. Bei Sauerstoffmangel wird die Bildung von $N_2$ bevorzugt bzw. die $NO_x$-Bildung unterdrückt oder sogar rückgängig gemacht. Die Bildung von Brennstoff $NO_x$ ist nur wenig temperaturabhängig und läuft auch bei niedrigen Temperaturen ab.

Die zur Reduzierung der $NO_x$-Emission anzuwendenden Maßnahmen zielen auf:
- Senkung der Verbrennungstemperatur und
- Erzeugen von Sauerstoffmangel bei der Verbrennung.

Bekannte Maßnahmen zur Reduzierung der $NO_x$-Emission in größeren Feuerungsanlagen zur Dampferzeugung, in denen die Brennstoffzufuhr auf Brenner in mehreren Brennerebenen aufgeteilt ist, sind einerseits das Umrüsten einer solchen Anlage auf $NO_x$-arme Brenner, andererseits die Beeinflussung des Verbrennungsprozesses innerhalb des Feuerraumes.

Zu den $NO_x$-armen Brennern zählen Brenner, bei denen Maßnahmen, wie die stufenweise Zuführung der Verbrennungsluft und die Rauchgasrückführung angewandt werden.

Solche Brenner sind z.B. in den Schriften DE-PS 29 08 448 und DE-OS 32 05 640 beschrieben. Brenner mit Rauchgasanschluß werden in der DE-PS 27 31 562 und der DE-OS 35 41 987 vorgestellt. Das Ansaugen von Rauchgas aus dem Feuerraum, wie in den Schriften DE-OS 35 41 987, DE-OS 33 27 597 und DE-OS 30 48 201 dargestellt, ist eine weitere Maßnahme zur Reduzierung der $NO_x$-Emission durch Brenner.

Eine derartige Umrüstung auf $NO_x$-arme Brenner einer größeren Feuerungsanlage mit je drei Brennern in zwei übereinanderliegenden Brennerebenen wird im BMFT-Statusseminar: Stickoxidminderung bei Kraftwerken, Jül-Conf-59, Dezember 86, S. 139-161 beschrieben. Die vorhandenen Brenner wurden in Stufenbrenner umgebaut, so daß die gesamte Verbrennungsluft in Primärluft und Stufenluft aufgeteilt werden kann. Ein Teil des rezirkulierten Rauchgases wird mit der Primärluft durch den Brennerkern aufgegeben, der andere mit kalter Frischluft als Stufenluft zugeführt. Dieses Verfahren ist auch Inhalt der DE-OS 35 01 189.

Ein wesentliches Merkmal bei Feuerungsanlagen mit mehreren übereinanderliegenden Brennerebenen ist, daß der Temperaturverlauf des Rauchgases entlang der Längsachse des Feuerraumes ein Maximum aufweist. Im Bereich um das Temperaturmaximum, im sogenannten Hochtemperaturbereich, setzt eine verstärkte Bildung von thermischem $NO_x$ ein.

Eine weitere Reduzierung der $NO_x$-Emission kann daher durch gezielte Beeinflussung des Verbrennungsprozesses im Feuerraum, z.B. durch eine zusätzliche Luft- oder Brennstoffstufung, erreicht werden.

Bei der Luftstufung im Feuerraum erhalten die Brenner nur einen Teil der zur vollständigen Verbrennung notwendigen Luftmenge. Die restliche Luft wird z.B. bei dem sogenannten OFA-Verfahren (Over-Fire-Air) oberhalb der Brenner in den Feuerraum eingeblasen.

Die DE-OS 34 03 981 beschreibt die Anwendung einer Variante des OFA-Verfahrens im Feuerraum eines Dampferzeugers mit Anordnung der Brenner in vertikal übereinanderliegenden Ebenen. Bei diesem Verfahren wird die Brennstoff- und Luftzufuhr durch die Brenner so eingestellt, daß im Feuerraum Zonen mit Luftmangel auftreten. Die für die vollständige Verbrennung notwendige Zusatzluft wird zur Verbesserung des Ausbrandes im wesentlichen durch Luftzuführungen unterhalb der untersten Brennerebene und nur zum geringen Teil als Oberluft eingeblasen.

Eine Variante des OFA-Verfahrens, bei der den Brennern und den Sekundärluftdüsen rezirkuliertes Abgas zugeführt wird, ist in der DE-OS 26 58 847 dargestellt.

Weitere Verfahren zur $NO_x$-Reduktion sind unter dem Namen IFNR-Verfahren (In-Furnace-$NO_x$-Reduction) zusammengefaßt. Bei der in der DE-OS 34 13 564 beschriebenen Brennstoffstufung im Feuerraum wird in Strömungsrichtung der entstehenden Rauchgase hinter der Hauptverbrennungszone weiterer Brennstoff zugeführt. Es handelt sich um ein Verfahren zur Verbrennung von festem, gemahlenen Brennstoff, bei dem der weitere Brennstoff durch Vergasung und/oder Entgasung von festen Brennstoffen gewonnen wird.

Ein weiteres Verfahren zur Verfeuerung von Kohlenstaub wird in der DE-OS 36 21 347 beschrieben. In wenigstens zwei Brennerebenen werden Luft und ggf. rückgeführtes kaltes Rauchgas derart zugeführt, daß sich im Bereich der unteren Brennerebene insgesamt ein nahezu stöchiometrisches und im Bereich der oberen Brennerebene ein stark unterstöchiometrisches Verbrennungsluftverhältnis einstellt. Oberhalb der oberen Brennerebene wird zusätzlich Reduktionsgas eingedüst und oberhalb der Reduktionsgaseindüsung Oberluft in den Feuerraum eingeblasen.

Bei dem gattungsbildenden MACT-Verfahren (Mitsubishi-Advanced-Combustion-Technology) und der entsprechenden gattungsbildenden Feuerungsanlage, wird dem Feuerraum zusätzlich Brennstoff oberhalb einer OFA-Anordnung mit übereinanderliegenden Brennerebenen und Oberluft zugeführt. Der zusätzliche Brennstoff wird, wie z.B. im $NO_x$-Symposium, Februar 1985, Karlsruhe auf S. 31 ff. beschrieben, zusammen mit rezirkuliertem Rauchgas, das einer guten Durchmischung dient, oberhalb der Oberluftzufuhr in den Feuerraum eingedüst. Diese zusätzliche Brennstoffzufuhr führt zu einer $NO_x$-Reduktionsreaktion. In einem bestimmten Abstand oberhalb der Düsen für den Zusatzbrennstoff wird wieder Luft, sogenannte Extraluft, die zum vollständigen Ausbrand benötigt wird, zugeführt. Das MACT-Verfahren wurde bei Öl-und Kohlefeuerungen angewandt, wobei als zusätzlicher Brennstoff, der zusammen mit Rauchgas zugeführt wird, nur Öl verwandt wird.

Bei den IFNR-Verfahren wird bei hoher Temperatur und stark reduzierender Atmosphäre im Hauptverbrennungsprozeß gebildetes $NO_x$ reduziert. Durch die reduzierende Atmosphäre bei hoher Temperatur besteht Korrosionsgefahr an den Kesselwänden. Bei Kohlenstaubfeuerungen besteht durch die Absenkung der Schmelztemperatur in reduzierender Atmosphäre außerdem Verschlackungsgefahr. Ebenso ist eine gewisse erneute Bildung von $NO_x$ beim Zumischen der zum Ausbrand notwendigen Extraluft nicht zu vermeiden.

Die erste Aufgabe der Erfindung ist, bei einem Verfahren gemäß den Oberbegriffen der Ansprüche 1 und 2 die $NO_x$-Emission ohne Erzeugung einer Zone hoher Temperatur und stark reduzierender Atmosphäre im Feuerraum zu reduzieren. Die zweite und dritte Aufgabe bestehen darin, eine Anlage gemäß dem Oberbegriff des Anspruchs 18 und dem des Anspruchs 19 so zu gestalten, daß sie zur Durchführung des im Anspruch 1 und des im Anspruch 4 beschriebenen Verfahrens geeignet ist.

Die erste Aufgabe wird erfindungsgemäß durch die kennzeichnenden Merkmale der Patentansprüche 1 und 2 gelöst.

Die Reduktion der $NO_x$-Emission des erfindungsgemäßen Verfahrens beruht darauf, daß während des gesamten Verbrennungsprozesses möglichst wenig $NO_x$ gebildet wird.

Bei mehreren gleichmäßig beaufschlagten Brennerebenen weist der Temperaturverlauf des Rauchgases im Feuerraum ein Maximum auf, in dem verstärkt $NO_x$ gebildet wird. Erfindungsgemäß wird durch unterschiedliche Behandlung der Brennerebenen die Temperatur des Rauchgases gezielt im Maximum, d.h. in dem Bereich, in dem durch den Verbrennungsprozeß bedingt die höchsten Temperaturen entstehen, gesenkt und im übrigen Verlauf leicht angehoben.

Die Feuerraumtemperaturen müssen einerseits hoch genug sein, um die Zündstabilität sicherzustellen, andererseits niedrig genug sein, um vermehrte $NO_x$-Bildung zu vermeiden. Das Optimum wird bei niedrigem, möglichst konstantem Temperaturverlauf im Feuerraum erreicht.

Bei dem erfindungsgemäßen Verfahren wird der gesamte Brennstoff in den Brennerebenen zugeführt. Ein möglichst konstanter Temperaturverlauf wird durch unterschiedliche Beaufschlagung der Brennerebenen eingestellt.

Dazu wird Brennstoff, Verbrennungsluft oder Rauchgas in mindestens zwei Stufen dem Feuerraum zugeführt. Eine Stufe umfaßt eine oder mehrere Brennerebenen, wobei in einer Stufe die Brennerebenen gleich behandelt werden.

Der optimale, möglichst konstante Temperaturverlauf wird durch Temperaturanhebung in der ersten Stufe und Temperatursenkung in der zweiten Stufe eingestellt. Die Temperaturanhebung in der ersten Stufe bewirkt eine verbesserte Grund- und Zündstabilität und damit günstige Verhältnisse für die zweite Stufe, in der gezielt die Temperatur des Maximums gesenkt wird. Dadurch wird die verstärkte $NO_x$-Bildung, die in einem ausgeprägten Temperaturmaximum stattfindet, vermieden. Die $NO_x$-Emission wird möglichst gering gehalten.

Die zur Temperaturglättung möglichen Maßnahmen sind:

- Veränderung der Brennstoffmenge pro Brennerebene,
- Veränderung des Anteilsquotienten,
- Zufuhr von rezirkuliertem Rauchgas und
- Zufuhr kalter Verbrenungsluft.

Als Anteilsquotient wird der Anteil der Verbrennungsluft in M-% bezogen auf den Anteil des Brennstoffes in M-% bezeichnet (M = Masse).

Eine Erhöhung der Brennstoffmenge oder eine Erhöhung des Anteilsquotienten bewirken eine Temperaturanhebung, eine Erniedrigung dieser Größen, sowie Rauchgaszufuhr oder Zufuhr kalter Verbrennungsluft eine Temperatursenkung.

Welche Maßnahme oder welche Maßnahmenkombination in der einzelnen Feuerungsanlage angewandt wird, hängt davon ab:

- ob Oberluftzufuhr vorhanden ist,
- ob Rauchgas rezirkuliert werden kann und
- inwieweit eine Anlage nachrüstbar ist.

Die Maßnahmen können sich außerdem in Abhängigkeit von der Art des Brennstoffes unterscheiden.

Wesentliche Vorteile des erfindungsgemäßen Verfahrens sind:

Der Aufwand durch einen Zusatzbrennstoff, z.B. durch zusätzliche Brennstoffdüsen, Einrichtungen für die Extraluft oder Bereitstellung des Zusatzbrennstoffs, entfällt.

Es können auch Altanlagen ohne Oberluftzufuhr oder ohne Möglichkeit der Rauchgasrezirkulation mit dem Verfahren betrieben werden.

Durch die Absenkung des Temperatur im Maximum wird eine Zone hoher Temperatur mit stark reduzierender Atmosphäre vermieden, wodurch die Korrosions- und die Verschlackungsgefahr erheblich verringert wird.

Das Merkmal des Anspruchs 1 beschreibt eine für die meisten Feuerungsanlagen geeignete, sehr effektive Maßnahme zur Glättung des Temperaturprofils. Es ist besonders für Feuerungsanlagen, bei denen weder Oberluftzufuhr noch Rauchgasrezirkulation möglich ist, geeignet. Die größere Brennstoffmenge in der ersten Stufe fördert den Verbrennungsprozeß und führt zu der gewünschten Temperaturanhebung. Die gegenüber der ersten Stufe geringeren Brennstoffmenge in der zweiten Stufe bewirkt die gezielte Temperaturabsenkung im Temperaturmaximum.

Für Feuerungsanlagen, in denen rezirkuliertes Rauchgas dem Feuerraum zugeführt werden kann, glättet die im Merkmal des Anspruchs 2 beschriebene Maßnahme wirkungsvoll das Tempe raturprofil. Die vermehrte Zufuhr von rezirkuliertem Rauchgas in der zweiten Stufe verzögert den Verbrennungsprozeß und senkt so gezielt die Temperatur des Maximums. Geringere Rauchgaszufuhr in der ersten Stufe hebt die Temperatur leicht an.

Vorteilhaft ist auch, daß dieses Verfahren in Feuerungsanlagen, die schon mit Brennern mit Rauchgasanschluß ausgerüstet sind, ohne größeren Aufwand angewendet werden kann.

Vorteil des Merkmals des Anspruchs 3 ist eine weitere Temperaturanhebung in der ersten Stufe und eine Temperatursenkung in der zweiten Stufe.

Das Merkmal des Anspruchs 4 hat den Vorteil, daß bei Anwendung des Verfahrens in vorhandenen Feuerungsanlagen nur die Brennerebenen der zweiten Stufe umgerüstet werden müssen.

Das Merkmal des Anspruchs 5 senkt wirkungsvoll das Temperaturmaximum ohne den Verbrennungsprozeß zu beeinträchtigen.

Durch das Merkmal des Anspruchs 6 kann das Temperaturmaximum zusätzlich auf direktem Weg gesenkt werden.

Das Merkmal des Anspruchs 7 bewirkt ebenfalls eine zusätzliche Absenkung des Temperaturmaximums.

Das Merkmal des Anspruchs 8 ist für Feuerungsanlagen mit Oberluftzufuhr von Vorteil. Ein Anteilsquotient von 0,7 bis 0,9, insbesondere von 0,8 bis 0,9, stellt die Zünd- und Grundstabilität des Verbrennungsprozesses bei Anwendung eines erfindungsgemäßen Verfahrens sicher.

Das Merkmal des Anspruchs 9 beschreibt eine vorteilhafte Aufteilung des Brennstoffs auf die Brennerebenen für Feuerungsanlagen mit vier Brennerebenen bei Anwendung des zweistufigen, erfindungsgemäßen Verfahrens.

Das Merkmal des Anspruchs 10 ist besonders für Feuerungsanlagen zur Verbrennung von Gas oder Öl, die mit vier Brennerebenen und Einrichtungen zur Oberluftzufuhr und Rauchgasrezirkulation ausgerüstet sind, geeignet.

Das Merkmal des Anspruchs 11 ist besonders für Feuerungsanlagen zur Verbrennung von Steinkohle, die mit vier Brennerebenen und Einrichtungen zur Oberluftzufuhr ausgerüstet sind, geeignet.

Das Merkmal des Anspruchs 12 ist besonders für Feuerungsanlagen zur Verbrennung von Braunkohle, die mit vier Brennerebenen und Einrichtungen zur Rauchgasrezirkulation ausgerüstet sind, geeignet.

Die Merkmale der Ansprüche 13 bis 17 betreffen erfindungsgemäße Verfahren, bei denen der Brennstoff mit Verbrennungsluft zur weiteren Temperaturglättung in drei Stufen zugeführt wird. Dabei wird durch die dritte Stufe die Temperatur der Rauchgase im Feuerraum oberhalb des Temperaturmaximums angehoben und so der konstante Teil des Temperaturverlaufes nach oben erweitert. Die Temperaturanhebung in der dritten Stufe unterstützt den vollständigen Ausbrand.

Vorteil des Merkmals des Anspruchs 13 ist, daß durch die Kombination von Rauchgasrezirkulation nur in der zweiten Stufe und geringerer Brennstoffmenge in der dritten Stufe ein optimaler konstanter Temperaturverlauf eingestellt wird.

Das gezielt zugeführte Rauchgas reduziert die Temperatur des Maximums beträchtlich. Durch die geringere Brennstoffzufuhr in der dritten Stufe wird ein zu großer Temperaturanstieg oberhalb des Maximums verhindert.

Das Merkmal des Anspruchs 14 ist besonders vorteilhaft für Feuerungsanlagen ohne Oberluftzufuhr. Die Temperaturanhebung oberhalb des Temperaturmaximums findet dabei durch eine stark vermehrte Zufuhr von Verbrennungsluft in der dritten Stufe statt. Die vermehrte Zufuhr von Verbrennungsluft in der dritten Stufe ermöglicht außerdem in der zweiten Stufe eine Verbrennung mit Luftmangel, wodurch das Temperaturmaximum gesenkt wird und stellt einen guten Ausbrand in der dritten Stufe sicher.

Das Merkmal des Anspruchs 15 beschreibt eine vorteilhafte Aufteilung des Brennstoffs auf die Brennerebenen für Feuerungsanlagen mit vier Brennerebenen bei Anwendung des dreistufigen, erfindungsgemäßen Verfahrens.

Das Merkmal des Anspruchs 16 ist besonders für Feuerungsanlagen zur Verbrennung von Öl oder Gas, die mit vier Brennerebenen und Einrichtungen zur Oberluftzufuhr und Rauchgasrezirkulation ausgerüstet sind, geeignet.

Das Merkmal des Anspruchs 17 ist besonders für Feuerungsanlagen zur Verbrennung von Braunkohle mit vier Brennerebenen, die keine Einrichtungen zur Oberluftzufuhr und Rauchgasrezirkulation aufweisen, geeignet.

Das kennzeichnende Merkmal des Anspruchs 18 löst die zweite Aufgabe und das des Anspruchs 19 die dritte Aufgabe.

Im Merkmal des Anspruchs 20 wird eine vorteilhafte Ausführung der Feuerungsanlage zur Anwendung des Verfahrens des Anspruchs 4 rückbezogen auf Anspruch 3 beschrieben.

Im Merkmal des Anspruchs 21 wird eine vorteilhafte Ausführung der Feuerungsanlage zur Anwendung des Verfahrens des Anspruchs 6 beschrieben.

Das Merkmal des Anspruchs 22 beschreibt eine für die Nachrüstung von vorhandenen Feuerungsanlagen vorteilhafte Ausführung.

Im Merkmal des Anspruchs 23 wird eine vorteilhafte Ausführung der Feuerungsanlage zur Anwendung des Verfahrens des Anspruchs 7 dargestellt.

Durch das Merkmal des Anspruchs 24 wird eine gute Durchmischung von Oberluft und Rauchgas, die zum vollständigen Ausbrand nötig ist, sichergestellt.

Die Erfindung wird im folgenden anhand mehrerer Beispiele für erfindungsgemäße Verfahren zur Durchführung in Feuerungsanlagen mit vier übereinanderangeordneten Brennerebenen erläutert. Die Beispiele 1 und 2 beschreiben zwei erfindungsgemäße Verfahren und Feuerungsanlagen zur Verbrennung von Gas in Feuerräumen mit Oberluftzufuhr und Rauchgasrezirkulation und die Beispiele 3 bis 5 solche zur Verbrennung von Kohlenstaub.

Dabei handelt es sich in den Beispielen 3 und 4 um Verfahren und Feuerungsanlagen zur Verbrennung von Steinkohle, bei dem dem Feuerraum Oberluft und im Beispiel 4 auch Rauchgas zugeführt werden kann, und im Beispiel 5 um ein Verfahren und eine Feuerungsanlage zur Verbrennung von harter Braunkohle in einer Altanlage ohne Möglichkeit der Oberluft- und Rauchgaszufuhr.

Die Zeichnung dient beispielhaft zur Erläuterung der Erfindung.

Figur 1 zeigt schematisch die Feuerungsanlage des Beispiels 1.

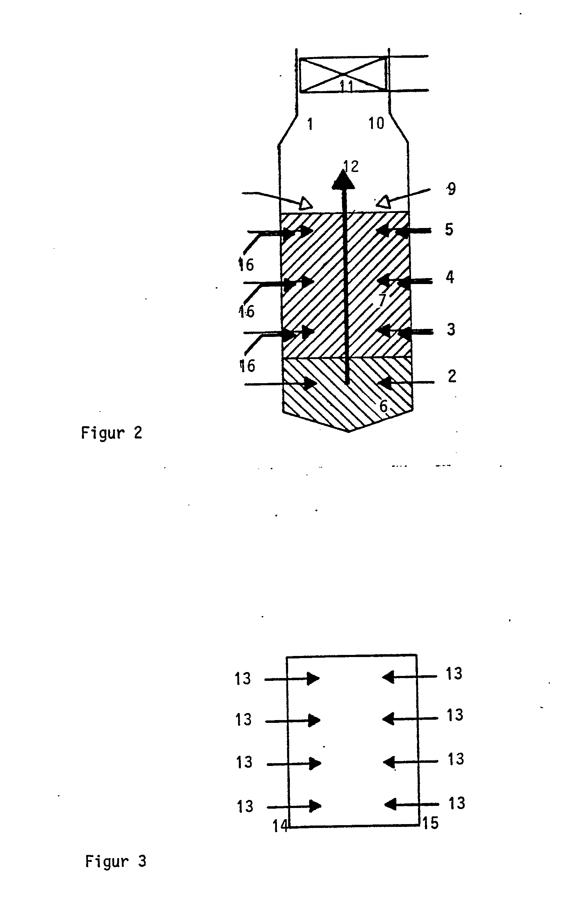

In Figur 2 ist der Feuerraum des Beispiels 2 dargestellt.

Figur 3 zeigt die Anordnung der Brenner in einer Brennerebene der Beispiele 1 und 2.

In Figur 4 sind die Temperaturverläufe des Rauchgases verschiedener Vergleichsverfahren (A, B) und erfindungsgemäßer Verfahren (C, D) zur Verbrennung von Gas in einem Feuerraum mit vier Brennerebenen, Oberluftzufuhr und Rauchgasrezirkulation aufgetragen.

5

In den Figuren 5 und 6 sind der Figur 4 entsprechende Diagramme von Verfahren (Verfahren E bis J) zur Verbrennung von Kohlenstaub aufgetragen. Die Figuren 5 und 6 zeigen außerdem die Anordnung der Brenner in den unteren, ersten Brennerebenen. Erfindungsgemäße Verfahren sind die Verfahren G, H und J.

Die in den Figuren eingezeichneten Pfeile kennzeichnen die Strömungsrichtungen.

### Beispiel 1 (dreistufiges Verfahren zur Verbrennung von Gas: Verfahren C)

In einem Feuerraum 1 einer Feuerungsanlage mit rechteckigem Querschnitt sind vier Brennerebenen 2, 3, 4 und 5 senkrecht übereinander angeordnet, wobei die unterste Brennerebene 2 in einer ersten Zone 6, die beiden darüber angeordneten Brennerebenen 3 und 4 in einer zweiten Zone 7 und die obere Brennerebene 5 in einer dritten Zone 8 liegen. Oberhalb der vierten Brennerebene 5 befinden sich Luftzuführungen 9, die um 10 bis 20° gegen die Waagerechte in Richtung des Feuerraumbodens geneigt sind.

Die senkrechten Ausdehnungen der ersten Zone 6 und der zweiten Zone 7 sind etwa gleich groß; die der dritten Zone 8 ist etwa halb so groß wie die der beiden ersten Zonen 6, 7. Nach oben schließt sich an die dritte Zone 8 ein Rauchgasraum 10 an, der durch ein Überhitzerpaket 11 nach oben begrenzt ist und dessen Ausdehnung von derselben Größenordnung ist wie die der mittleren Zone 7. Der nach oben gerichtete Pfeil 12 symbolisiert die Richtung des Rauchgasstromes in dem Feuerraum 1.

In jeder der Brennerebenen 2 bis 5 befinden sich acht waagerecht ausgerichtete Brenner 13. Die acht Brenner 13 einer Ebene sind zu je vier nebeneinander auf zwei gegenüberliegenden Stirnwänden 14 und 15 des Feuerraumes 1 angebracht. Die beiden Stirnwände 14 und 15 bilden im Querschnitt des Feuerraumes 1 die längeren Seiten des Rechteckes.

Die Brenner 13 der Brennerebenen 3 und 4 in der zweiten Zone 7 sind mit Rauchgasrückführungen 16 ausgestattet. An das Überhitzerpaket 11 schließen sich weitere, nicht voll ständig dargestellte Rauchgaszüge 17, die zu einem Rauchgaskanal 18 führen, an. Der Rauchgaskanal 18 ist in Richtung des Rauchgasstromes hintereinander an einen Luftvorwärmer 19 und an ein Elektrofilter 20 angeschlossen. Vor dem Luftvorwärmer 19 zweigt von dem Rauchgaskanal 18 eine Rauchgasumführung 21 ab. Die Rauchgasumführung 21 ist eine Rauchgasleitung, die mit einer Dosiervorrichtung 22 versehen ist und zwischen Luftvorwärmer 19 und Elektrofilter 20 wieder in den Rauchgaskanal 18 einmündet.

Eine Verbindungsleitung 23 verbindet den Rauchgaskanal 18 mit den Rauchgasrückführungen 16 der Brenner 13 der zweiten Zone 7. In der Verbindungsleitung 23 befinden sich hintereinander in Richtung des Rauchgasstromes zu den Brennern 13 eine Dosiervorrichtung 24 und ein Gebläse 25.

Bei Öl- oder Gasfeuerungen ist die Verbindungsleitung 23 vor der Dosiervorrichtung 22 der Rauchgasumführung 21 an die Rauchgasumführung 21 angeschlossen und so mit dem Rauchgaskanal 18 verbunden.

In die Verbindungsleitung 23 mündet zwischen der Dosiervorrichtung 24 und dem Gebläse 25 eine mit einer Dosiervorrichtung 26 versehene Kaltluftleitung 27. Die Kaltluftleitung 27 ist alternativ mit einem Ansaugstutzen 28 (strichpunktierter Pfeil) versehen oder über einer zweite Kaltluftleitung 29 zwischen einem Luftgebläse 30 und dem Luftvorwärmer 19 an eine Luftleitung 31 angeschlossen.

Die Luftleitung 31 führt zum Feuerraum 1 und verzweigt sich in jeweils mit Dosiervorrichtungen 32 versehene Anschlüsse an die Brenner 13 der Brennerebenen 2, 3, 4 und 5 sowie an die Luftzuführungen 9.

Hinter dem Luftvorwärmer 19 hat die Luftleitung 31 eine Dosiervorrichtung 33. Zwischen Dosiervorrichtung 33 und Luftvorwärmer 19 befindet sich an der Luftleitung 31 eine Abzweigung zu einer Luftleitung 34, die mit einer Dosiervorrichtung 35 versehen ist und über einen Wasser-Luft-Kühler 36 hinter der Dosiervorrichtung 33 der Luftleitung 31 wieder auf die Luftleitung 31 trifft.

Eine Wasserleitung 37 führt über eine Speisewasservorwärmstufe 38 zu dem Wasser-Luft-Kühler 36 und zu einer weiteren Speisewasservorwärmstufe 39.

Im Betrieb ist die gesamte dem Feuerraum 1 zugeführte Verbrennungsluft je nach Brennstoff um einen Faktor von 1,05 bis 1,3 größer als der stöchiometrische Wert zur Verbrennung des gesamten Brennstoffes. Der Faktor beträgt bei der Verbrennung von Gas etwa 1,05 bis 1,10, bei der Verbrennung von Öl 1,03 bis 1,05 und bei der Verbrennung von Kohlenstaub 1,1 bis 1,3. In dem vorliegenden Verfahren (Beispiel 1) wird Gas mit einem Luftfaktor von 1,10 für die gesamte dem Feuerraum 1 zugeführte Verbrennungsluft verwendet.

Die Zufuhr von Brennstoff und Verbrennungsluft in den Feuerraum 1 erfolgt hintereinander in Richtung des Rauchgasstromes in drei Stufen, wobei der gesamte Brennstoff durch die Brenner 13 der vier Brennerebenen 2, 3, 4 und 5 zugeführt wird.

In der ersten und zweiten Stufe wird je 27 % des Brennstoffes in den Brennerebnen 2, 3 und 4 und in der dritten Stufe in der vierten Brennerebene 5 19 % des Brennstoffes zugeführt. Zusammen mit dem Brennstoff wird in den Brenner ebenen 2 bis 5 84 % der Verbrennungsluft zugeführt, wobei in den unteren drei Brennerebenen 2 bis 4 je etwa 23 % und in der vierten Brennerebene 5 etwa 16 % der Verbrennungsluft zugeführt wird. Der Anteilsquotient, d.h. der Anteil der zugeführten Luft bezogen auf den Anteil des zugeführten Brennstoffes, beträgt etwa 0,84. Durch dieses Mischungsverhältnis wird der Brennstoff in den drei Zonen 6 bis 8 bei einem Luftfaktor von etwa 0,92 verbrannt. Die restliche Verbrennungsluft von 16 % wird durch die nach unten geneigten Luftzuführungen 9 untergemischt und sorgt für einen vollständigen Ausbrand des Brennstoffes.

Das entstandene Rauchgas strömt über die Überhitzerpakete 11 durch nicht vollständig dargestellte Rauchgaszüge 17 in den Rauchgaskanal 18. Im Rauchgaskanal 18 wird das Rauchgas durch den Luftvorwärmer 19 und durch den Elektrofilter 20 geleitet. 10 bis 20 % des Rauchgases werden über die Dosiervorrichtung 22 in der Rauchgasumführung 21 um den Luftvorwärmer 19 herumgeführt. Weitere 15 % des Rauchgases werden vom Rauchgasstrom abgezweigt und über die Dosiervorrichtung 24 und das Gebläse 25 in der Verbindungsleitung 23 zu den Rauchgasführungen 16 der Brenner 13 der zweiten Zone 7 zurückgeführt.

Dieser rezirkulierte Anteil des Rauchgases wird bei Gasfeuerung ebenso wie bei Ölfeuerung vor dem Luftvorwärmer 19 vom Rauchgasstrom abgezweigt.

Dem rezirkulierten Rauchgas wird zwischen der Dosiervorrichtung 24 und dem Gebläse 25 über die Kaltluftleitung 27 ein mit Hilfe der Dosiervorrichtung 26 eingestellter Anteil von 5 % der Verbrennungsluft als Kaltluft bei Umgebungs temperatur oder bei einer Temperatur von 10 bis 50°C zugemischt. Durch die Zufuhr kalter Verbrennungsluft wird die Temperatur des rezirkulierten Rauchgases auf 300 bis 360°C eingestellt. Dieser kalte Anteil der Verbrennungsluft, der mit dem rezirkulierten Rauchgas den Brennern 13 der Reduktionszone 7 zugeführt wird, wird entweder über die Öffnungen 28 frei aus der Umgebung angesaugt oder vom Luftstrom, der durch das Gebläse 30 angesaugt und zum Luftvorwärmer 19 geführt wird, vor dem Luftvorwärmer 19 abgezweigt.

Da in der ersten Zone 6 weder Rauchgas noch Kaltluft zugeführt wird, wird in dieser Zone 6 die Grund- und Zündstabilität im unteren Feuerraum gesichert und günstige Voraussetzungen für die Rauchgaszufuhr in der zweiten Stufe 7 geschaffen.

Der durch den Luftvorwärmer 19 geführte Luftstrom wird erhitzt und als heißer Anteil von 95 % der Verbrennungsluft dem Feuerraum 1 bei einer Temperatur von 300 bis 360°C zugeführt. Die Temperatur der heißen Verbrennungsluft wird im wesentlichen durch die um den Luftvorwärmer 19 herumgeführte Rauchgasmenge von 10 bis 20 % und zusätzlich durch eine Teilmenge der heißen Verbrennungsluft, die hinter dem Luftvorwärmer 19 abgezweigt und durch einen Wasser-Luft-Kühler 36 geleitet wird, bestimmt.

Die heiße Verbrennungsluft wird auf die Brenner 13 der vier Brennerebenen 2, 3, 4 und 5 und die Luftöffnungen 9 aufgeteilt. Die einzelnen Anteile werden mit Hilfe der Dosiervorrichtungen 33 eingestellt und sind in der Tabelle 1 aufgelistet. Dabei ist zu berücksichtigen, daß in der zweiten und dritten Brennerebene 3, 4, d.h. in der zweiten Zone insgesamt 5 % der Verbrennungsluft als kalte Luft mit dem rezirkulierten Rauchgas zugeführt wird.

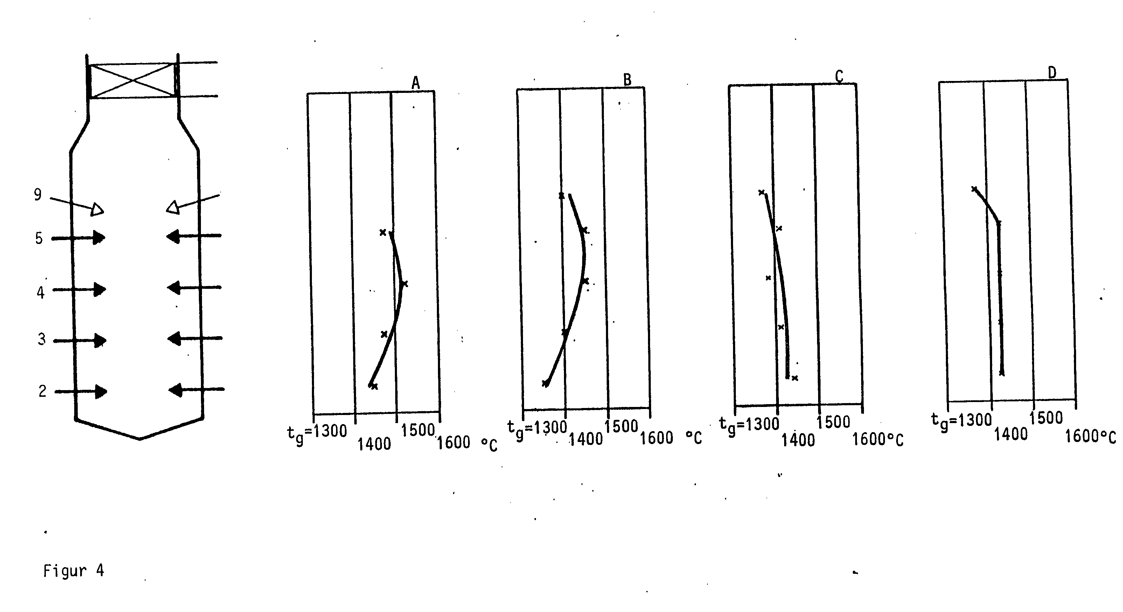

Zur weiteren Erläuterung der Erfindung wurde der unterschiedliche Einfluß verschiedener Verfahren auf den Temperaturverlauf des Rauchgases entlang der Längachse des Feuerraumes 1 mit einem Feuerraum-Zonenmodell berechnet. Die neben den Brennstoffdaten des hier benutzten Erdgases zur Berechnung der Temperaturverläufe verwendeten Massenströme sind als gerundete Werte in der Tabelle 1 aufgelistet. Die entsprechenden Temperaturverläufe sind in Figur 4 dargestellt.

Dabei wird das in diesem Beispiel beschriebene erfindungsgemäße Verfahren C einem Verfahren A mit gleichmäßiger Brennstoff- und Luftaufgabe und einem Verfahren B mit Oberluftzufuhr und gleichmäßiger Rauchgasrückführung gegenübergestellt.

Der Temperaturverlauf des Verfahrens A mit gleichmäßiger Brennstoff- und Luftaufgabe zeigt ein ausgeprägtes Temperaturmaximum. Durch die schon $NO_x$-mindernden Maßnahmen der Luftstufung im Feuerraum (OFA) und der gleichmäßigen Rauchgasrückführung des Verfahrens B verschiebt sich der gesamte Temperaturverlauf zu niedrigen Temperaturen. Bei Anwendung eines erfindungsgemäßen Verfahrens C erhält man durch erhebliche Senkung des Temperaturmaximums und durch leichte Anhebung der Temperatur in der ersten Zone 6 eine Glättung des Temperaturverlaufes verglichen mit den Temperaturverläufen der Verfahren A und B.

Dies ist, berücksichtigt man die exponentielle Abhängigkeit der Bildungsrate des thermischen $NO_x$ von der Temperatur, eine effektive Maßnahme zur Reduzierung der $NO_x$-Emission.

Beispiel 2 (zweistufiges Verfahren zur Verbrennung von Gas: Verfahren D):

7

Die Feuerungsanlage des Beispiels 2 unterscheidet sich nur in folgenden Punkten von der des Beispiels 1:

- Zusätzlich zu den Brennerebenen 3 und 4 gehört auch die Brennerebene 5 zur zweiten Zone 7, deren Ausdehnung größer ist als die der ersten Zone 6.
- Die Brenner 13 der Brennerebene 5 sind ebenfalls mit Rauchgasrückführungen 16 ausgestattet.

Abweichend zum Verfahren des Beispiels 1 wird im Betrieb in jeder der Brennerebenen 2 bis 5 je 25 % des Brennstoffes und 21 % der Verbrennungsluft zugeführt. In allen Brennerebenen beträgt der Anteilsquotient 0,84. Der Brennstoff wird bei einem Luftfaktor von 0,92 verbrannt. Zu je gleichen Teilen wird 15 % Rauchgas und 5 % Kaltluft in den drei Brennerebenen 3 bis 5 zugeführt.

Für die spezielle Anordnung der hier beschriebenen Feuerungsanlage und das betrachtete Erdgas führt das erfindungsgemäße Verfahren D (Tabelle 1) des Beispiels 2 zu einem konstanten, niedrigen Temperaturverlauf, wie in Figur 4 aufgezeigt, und damit zu einer verringerten $NO_x$-Emission. Dieses Verfahren D hat darüber hinaus den Vorteil, daß es wegen der Gleichverteilung von Brennstoff und Luft in den vier Brennerebenen 2 bis 5 besonders einfach zu realisieren ist.

Bei den Verfahren der Beispiele 1 und 2 kann statt 15 % Rauchgases und 5 % Kaltluft 20 % Rauchgas zugeführt werden (vgl. Tabelle 1).

Beispiel 3 (zweistufiges Verfahren zur Verbrennung von Steinkohlenstaub in einer Feuerungsanlage ohne Rauchgasrezirkulation: Verfahren G):

Die Feuerungsanlage des Beispiels 3 zur Verbrennung von Steinkohle ist mit Oberluftzufuhr ausgerüstet. Neben den Unterschieden bzgl. Art der Brenner, Ascheabzug u.a., die auf den Brennstoff zurückzuführen sind, unterscheidet sich die Feuerungsanlage vom Beispiel 2 darin, daß in den oberen drei Brennerebenen 3, 4 und 5 jeweils nur vier Brenner 13 auf einer Stirnwand 14 angebracht sind. In der unteren Brennerebene 2 befinden sich auf beiden Stirnwänden 14, 15 je vier Brenner 13.

Im Betrieb wird Kohlenstaub mit Luft eines gesamten Luftfaktors von 1,2 dem Feuerraum 1 zugeführt. In der ersten Stufe wird zweimal 20 %, d.h. 40 %, des Brennstoffs durch die acht Brenner 13 der ersten Brennerebene 2 und in der zweiten Stufe in den drei Brennerebenen 3, 4 und 5 je 20 % des Brennstoffes zugeführt. Der in den Brennerebenen 2 bis 5 zugeführte Anteil der Verbrennungsluft beträgt 84 %, der Anteilsquotient in allen Brennerebenen 2 bis 5 etwa 0,84 und der Luftfaktor etwa 1,01, d.h. pro 20 % des Brennstoffes wird etwa 17 % der Verbrennungsluft zugeführt. Die Zufuhr der restlichen Verbrennungsluft von 16 % erfolgt durch die Luftzuführungen 9.

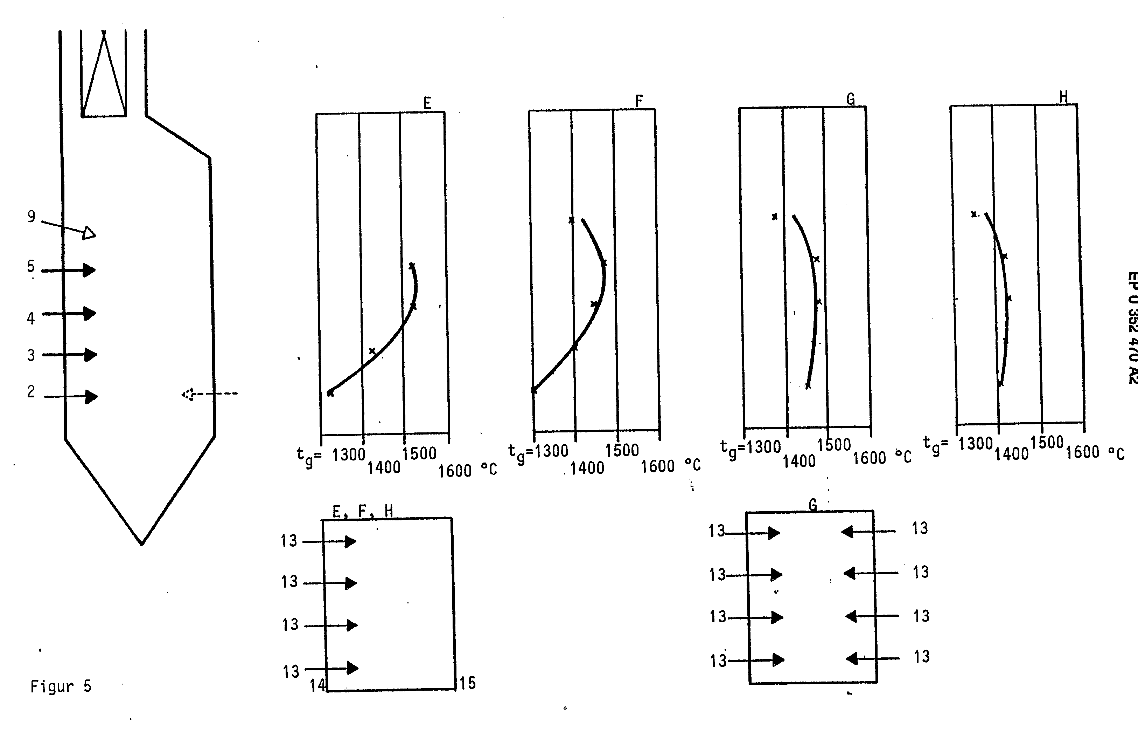

Verglichen mit einer gleichmäßigen Aufteilung des Brennstoffs auf die vier Brennerebenen 2 bis 5 des Verfahrens E (vgl. Tabelle 2 und Fig. 5) führt die erfindungsgemäße Aufteilung des Verfahrens G zu einem wesentlich konstanteren Temperaturprofil mit abgesenktem Maximum. Das Verfahren G hat zudem den Vorteil, daß durch die gleichmäßige Beaufschlagung aller Brenner 13 eine einfache Verfahrensführung ermöglicht wird.

Beispiel 4 (zweistufiges Verfahren zur Verbrennung von Steinkohlenstaub mit Rauchgasrezirkulation: Verfahren H):

Die Feuerungsanlage des Beispiels 4 unterscheidet sich von der des Beispiels 3 darin, daß in jeder der vier Brennerebenen 2, 3, 4 und 5 jeweils nur vier Brenner 13 auf einer Stirnwand 14 angebracht sind.

Die Einrichtung zur Rauchgasrezirkulation des Beispiels 4 unterscheidet sich in folgendem Punkt von der des Beispiels 2:

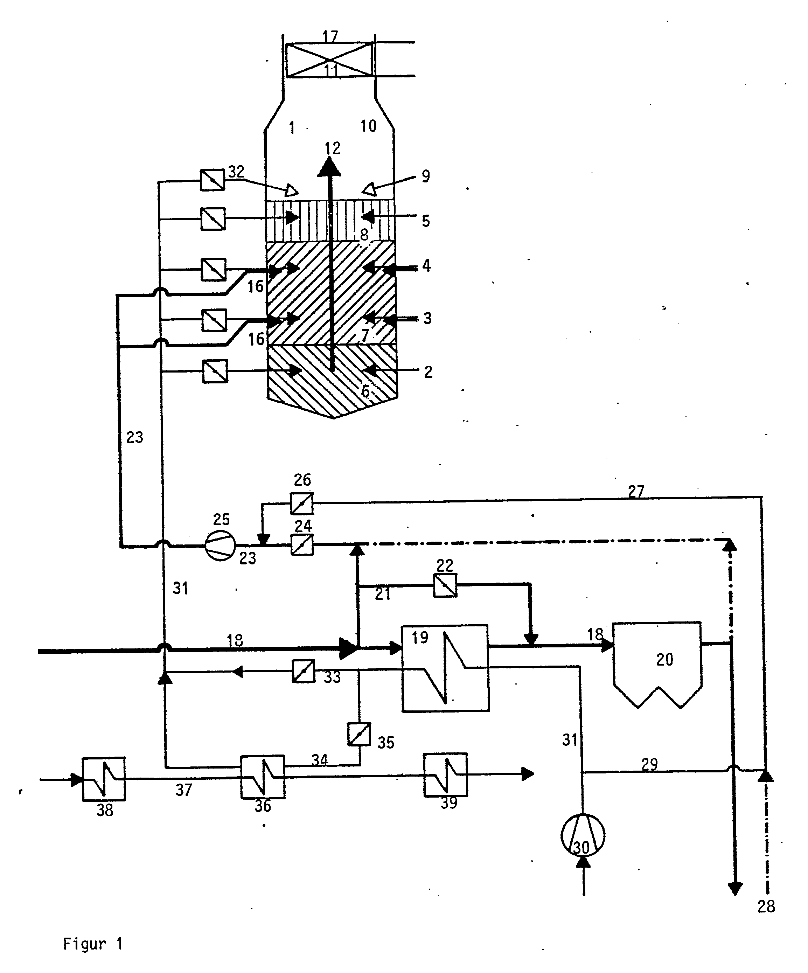

Die Verbindungsleitung 23, die den Rauchgaskanal 18 mit den Rauchgasrückführungen 16 der Brenner 13 der zweiten Zone 7 verbindet, ist hinter dem Elektrofilter 20 direkt an den Rauchgaskanal 18 angeschlossen, wie durch eine strichpunktierte Linie in Figur 1 angedeutet.

Im Betrieb wird Kohlenstaub mit Luft eines gesamten Luftfaktors von 1,2 dem Feuerraum 1 zugeführt. In der ersten Stufe wird in der ersten Brennerebene 2 etwa 33 % des Brennstoffes und in der zweiten Stufe gleichmäßig auf die drei Brennerebenen 3, 4 und 5 verteilt etwa 67 % des Brennstoffes zugeführt. Der in den Brennerebenen 2 bis 5 zugeführte Anteil der Verbrennungsluft beträgt etwa 85 %, wobei in der ersten Stufe in der ersten Brennerebene 2 etwa 29 % der Verbrennungsluft (Anteilsquotient etwa 0,88) und gleichmäßig auf die drei Brennerebenen 3 bis 5 verteilt in der zweiten Stufe 56 % der Verbrennungsluft (Anteilsquotient etwa 0,84) zugeführt wird. Zusammen mit Brennstoff und Verbrennungsluft wird in der zweiten Stufe in den Brennerebenen 3 bis 5 je ein Drittel des rezirkulierten Rauchgases von 10 % zugeführt. Der rezirkulierte Anteil des Rauchgases von 10 % wird hinter dem Elektrofilter 20 abgezweigt. Die restliche Luftzufuhr von etwa 15 % der Luft erfolgt durch die Luftzuführungen 9.

Bei Kohlenstaubfeuerungen ist es aus Gründen der Zündstabilität vorteilhaft etwas weniger Rauchgas als bei Öl- und Gasfeuerungen zu rezirkulieren und auf die Zufuhr von kalter Verbrennungsluft zu verzichten.

Die erfindungsgemäßen Maßnahmen dieses Beispiels sind:
- erhöhte Brennstoffzufuhr in der ersten Stufe und
- die Rauchgasrezirkulation ausschließlich in der zweiten Stufe.

Der Vergleich des nach dem Feuerraum-Zonenmodell berechneten Temperaturverlaufes dieses erfindungsgemäßen Verfahrens H mit dem eines Verfahrens E mit gleichmäßiger Brennstoff- und Luftaufgabe und dem eines Verfahrens F mit den $NO_x$-mindernden Maßnahmen: Oberluftzufuhr und gleichmäßige Rauchgasrückführung (vgl. Tabelle 2) in Figur 5 zeigt:

Das ausgeprägte Temperaturmaximum des Verfahrens E wird durch die Maßnahmen des Verfahrens F zu tieferen Temperaturen verschoben. Das erfindungsgemäße Verfahren H bewirkt darüber hinaus eine merkliche Senkung des Temperaturmaximums und eine Anhebung der Temperatur im übrigen Bereich und damit eine weitere Reduktion der $NO_x$-Emission.

Beispiel 5 (dreistufiges Verfahren zur Verbrennung von Braunkohle in einer Altanlage: Verfahren J):

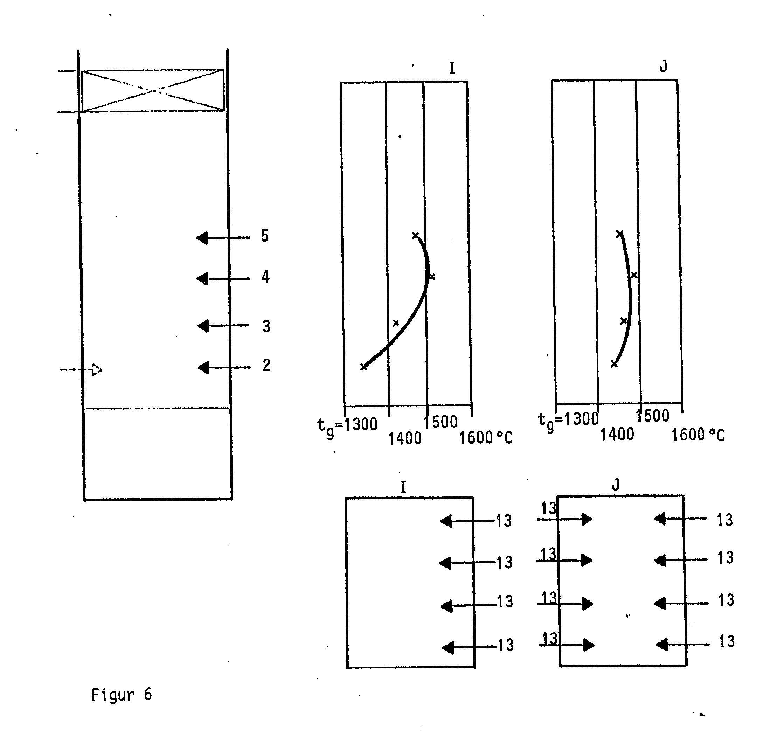

In dem Beispiel 5 wird die Erfindung anhand eines Verfahren für eine Feuerungsanlage zur Verbrennung von Braunkohlenstaub beschrieben. Dabei handelt es sich um eine Altanlage mit vier übereinanderliegenden Brennerebenen 2, 3, 4 und 5 ohne Oberluftzufuhr und ohne Rauchgasrezirkulation (vgl. Figur 6). Die Anordnung der Brenner 13 entspricht der des Beispiels 3.

Im Betrieb wird Kohlenstaub mit Verbrennungsluft eines gesamten Luftfaktors von 1,2 dem Feuerraum 1 zugeführt.

Bei dem erfindungsgemäßen Verfahren J wird dem Feuerraum 1 Brennstoff und Verbrennungsluft in drei Stufen zugeführt (vgl. Tabelle 3). In der ersten Stufe wird der ersten Brennerebene 2 zweimal 20 %, d.h. 40 %, des Brennstoffs mit etwa 34 % der Verbrennungsluft, in der zweiten Stufe, die die Brennerebenen 3 und 4 umfaßt, je 20 % des Brennstoffs mit etwa 17 % der Verbrennungsluft und in der dritten Stufe in der vierten Brennerebene 5 20 % des Brennstoffs mit etwa 33 % der Verbrennungsluft zugeführt.

Der nach dem Feuerraum-Zonenmodell berechnete Temperaturverlauf des Rauchgases im Feuerraum dieses erfindungsgemäßen Verfahrens J ist in Figur 6 neben dem Temperaturverlauf des Verfahrens I mit gleichmäßiger Brennstoff- und Luftaufgabe dargestellt.

Da im Beispiel 5 Hartbraunkohle als Brennstoff verwendet wird, sind die Rauchgastemperaturen bei den entsprechenden Verfahren niedriger als die der Beispiele 3 und 4, bei denen Steinkohle verwendet wird.

Die im Verfahren J erhöhte Brennstoffzufuhr in der ersten und der erhöhte Anteilsquotient in der dritten Stufe führen verglichen mit gleicher Beaufschlagung der Brennerebenen 2, 3, 4 und 5 des Verfahrens I zu einem wesentlich konstanteren Temperaturverlauf: das Temperaturmaximum wird gesenkt und die Temperatur im übrigen Bereich angehoben.

Tabelle 1

| Verfahren | A | | | B | | | C | | | D | | |
|---|---|---|---|---|---|---|---|---|---|---|---|---|
| Ges. Kaltluft %<br>Ges. Rauchgasrezi % | | -<br>- | | | -<br>20 | | 5<br>15 | | -<br>20 | 5<br>15 | | -<br>20 |
| | Brenn. | Luft | Rezi | Brenn. | Luft | Rezi | Brenn | Luft | Rezi | Brenn. | Luft | Rezi |
| Oberluft %<br>4. Brennerebene % | -<br>25 | -<br>25 | -<br>- | -<br>25 | 16<br>21 | 16<br>21 | -<br>19 | 16<br>16 | 0<br>0 | -<br>25 | 16<br>21 | 0<br>33 |
| 3. Brennerebene %<br>2. Brennerebene % | 25<br>25 | 25<br>25 | -<br>- | 25<br>25 | 21<br>21 | 21<br>21 | 27<br>27 | 23<br>23 | 50<br>50 | 25<br>25 | 21<br>21 | 33<br>33 |
| 1. Brennerebene % | 25 | 25 | - | 25 | 21 | 21 | 27 | 23 | 0 | 25 | 21 | 0 |
| (Werte gerundet!) | | | | | | | | | | | | |
| Massenströme einer Feuerung für Gas oder Öl | | | | | | | | | | | | |

Tabelle 2

| Verfahren | E | | | F | | | G | | | H | | |
|---|---|---|---|---|---|---|---|---|---|---|---|---|
| Ges. Kaltluft %<br>Ges. Rauchgasrezi % | | -<br>- | | | -<br>10 | | | -<br>- | | | -<br>10 | |
| | Brenn. | Luft | Rezi | Brenn. | Luft | Rezi | Brenn. | Luft | Rezi | Brenn. | Luft | Rezi |
| Oberluft %<br>4. Brennerebene %<br>3. Brennerebene %<br>2. Brennerebene % | -<br>25<br>25<br>25 | -<br>25<br>25<br>25 | -<br>-<br>-<br>- | -<br>25<br>25<br>25 | 16<br>21<br>21<br>21 | 0<br>25<br>25<br>25 | -<br>20<br>20<br>20 | 16<br>17<br>17<br>17 | -<br>-<br>-<br>- | -<br>23<br>23<br>23 | 15<br>19<br>19<br>19 | 0<br>33<br>33<br>33 |
| 1. Brennerebene % | 25 | 25 | - | 25 | 21 | 25 | 2×20 | 2×17 | - | 23 | 29 | 0 |
| (Werte gerundet!) | | | | | | | | | | | | |
| Massenströme einer Feuerung für Steinkohle | | | | | | | | | | | | |

Tabelle 3

| Verfahren | I | | | J | | |
|---|---|---|---|---|---|---|
| Ges. Kaltluft % <br> Ges. Rauchgasrezi % | - <br> - | | | - <br> - | | |
| | Brenn. | Luft | Rezi | Brenn. | Luft | Rezi |
| Oberluft % <br> 4. Brennerebene % | - <br> 25 | - <br> 25 | - <br> - | - <br> 20 | - <br> 33 | - <br> - |
| 3. Brennerebene % <br> 2. Brennerebene % | 25 <br> 25 | 25 <br> 25 | - <br> - | 20 <br> 20 | 17 <br> 17 | - <br> - |
| 1. Brennerebene % | 25 | 25 | - | 2×20 | 2×17 | - |
| | (Werte gerundet!) | | | | | |
| Massenströme einer Feuerung für Braunkohle | | | | | | |

## Ansprüche

1. Verfahren zur Verbrennung fossiler Brennstoffe unter reduzierter Bildung von Stickoxiden in einer Feuerungsanlage mit mehreren übereinanderliegenden Brennerebenen,
dadurch gekennzeichnet, daß einem Feuerraum (1)
- der gesamte Brennstoff in den Brennerebenen und
- der Brennstoff mit Verbrennungsluft in mindestens zwei Stufen zugeführt wird, wobei
- die pro Brennerebene zugeführte Brennstoffmenge in der in Richtung des Rauchgasstromes ersten Stufe größer ist als in der zweiten Stufe, die die Brennerebenen in Höhe des Temperaturmaximums des Rauchgases im Feuerraum (1) umfaßt.

2. Verfahren nach dem Oberbegriff des Anspruchs 1, bei dem dem Feuerraum rezirkuliertes Rauchgas zugeführt wird, dadurch gekennzeichnet, daß dem Feuerraum (1)
- der gesamte Brennstoff in den Brennerebenen und
- der Brennstoff mit Verbrennungsluft in mindestens zwei Stufen zugeführt wird, wobei
- der auf die Brennstoffmenge bezogene Anteil des rezirkulierten Rauchgases in der zweiten Stufe, die die Brennerebenen in Höhe des Temperaturmaximums des Rauchgases im Feuerraum (1) umfaßt, größer ist als in der ersten Stufe.

3. Verfahren nach Anspruch 2, dadurch gekennzeichnet, daß die pro Brennerebene zugeführte Brennstoffmenge in der ersten Stufe größer ist als in der zweiten Stufe.

4. Verfahren nach einem der Ansprüche 2 oder 3 dadurch gekennzeichnet, daß das rezirkulierte Rauchgas ausschließlich in der zweiten Stufe zugeführt wird.

5. Verfahren nach einem der Ansprüche 2 bis 4, dadurch gekennzeichnet, daß 10 bis 30 % des Rauchgases rezirkuliert wird, insbesondere 10 bis 30 % bei Braunkohlefeuerungen, 10 bis 25 % bei Gas- und Ölfeuerungen und 10 bis 20 % bei Steinkohlefeuerungen.

6. Verfahren nach einem der Ansprüche 1 bis 5, dadurch gekennzeichnet, daß in der zweiten Stufe 5 bis 15 % der Verbrennungsluft als Kaltluft zugeführt wird.

7. Verfahren nach einem der Ansprüche 1 bis 6, dadurch gekennzeichnet, daß die zweite Stufe mindestens zwei in Richtung des Rauchgasstromes hintereinanderliegende Brennerebenen umfaßt.

8. Verfahren nach einem der Ansprüche 1 bis 7, bei dem dem Feuerraum ein Teil der Verbrennungsluft als Oberluft zugeführt wird, dadurch gekennzeichnet, daß der Anteilsquotient aus dem in einer Brennerebene zugeführten Anteil der Verbrennungsluft bezogen auf den entsprechenden Anteil des Brennstoffs 0,7 bis 0,9, insbesondere 0,8 bis 0,9, beträgt und 10 bis 30 % der Verbrennungsluft als Oberluft zugeführt wird, insbesondere 10 bis 30 % bei Braunkohlefeuerungen, 10 bis 25 % bei Steinkohlefeuerungen und 10 bis 20 % bei Gas- und Ölfeuerungen.

9. Verfahren nach Anspruch 8 für eine Feuerungsanlage mit vier übereinanderliegenden Brennerebenen, dadurch gekennzeichnet, daß Brennstoff in zwei Stufen gemäß folgender Tabelle zugeführt wird:

| Stufe | Anzahl der Brennerebenen | Brennstoff/Brennerebene (%) |
|-------|--------------------------|------------------------------|
| 2 | 3 | 18 - 28 |
| 1 | 1 | 23 - 46 |

10. Verfahren nach Anspruch 9, bei dem dem Feuerraum rezirkuliertes Rauchgas zugeführt wird, dadurch gekennzeichnet, daß 12 bis 20 % der Verbrennungsluft als Oberluft und in den Brennerebenen Brennstoff mit Verbrennungsluft und rezirkuliertes Rauchgas gemäß folgender Tabelle zugeführt wird:

| Stufe | Anzahl der Brennerebenen | Brennstoff/Brennerebene (%) | Anteilsquotient | Rauchgas/Brennerebene (%) |
|-------|--------------------------|------------------------------|-----------------|----------------------------|
| 2 | 3 | 23 - 28 | 0,82-0,88 | 32 - 34 |
| 1 | 1 | 23 - 28 | 0,82-0,88 | - |

11. Verfahren nach Anspruch 9, dadurch gekennzeichnet, daß 12 bis 20 % der Verbrennungsluft als Oberluft und Brennstoff mit Verbrennungsluft in den Brennerebenen gemäß folgender Tabelle zugeführt wird:

| Stufe | Anzahl der Brennerebenen | Brennstoff/Brennerebene (%) | Anteilsquotient |
|-------|--------------------------|------------------------------|-----------------|
| 2 | 3 | 18 - 22 | 0,82-0,88 |
| 1 | 1 | 34 - 46 | 0,82-0,88 |

12. Verfahren nach Anspruch 9, bei dem dem Feuerraum rezirkuliertes Rauchgas zugeführt wird, dadurch gekennzeichnet, daß 12 bis 20 % der Verbrennungsluft als Oberluft und in den Brennerebenen Brennstoff mit Verbrennungsluft und rezirkuliertes Rauchgas gemäß folgender Tabelle zugeführt wird:

| Stufe | Anzahl der Brennerebenen | Brennstoff/Brennerebene (%) | Anteilsquotient | Rauchgas/Brennerebene (%) |
|-------|--------------------------|------------------------------|-----------------|----------------------------|
| 2 | 3 | 20 - 26 | 0,82-0,88 | 32 - 34 |
| 1 | 1 | 29 - 33 | 0,82-0,88 | - |

13. Verfahren nach einen der Ansprüche 1 bis 8, bei dem dem Feuerraum rezirkuliertes Rauchgas zugeführt wird, dadurch gekennzeichnet, daß
- der Brennstoff mit Verbrennungsluft dem Feuerraum (1) in drei Stufen zugeführt wird,
- nur in der zweiten Stufe rezirkuliertes Rauchgas zugeführt wird und
- in einer dritten Stufe die pro Brennerebene zugeführte Brennstoffmenge kleiner ist als in der zweiten Stufe.

14 . Verfahren nach einem der Ansprüche 1 bis 7 oder 13, bei dem dem Feuerraum die gesamte Verbrennungsluft in den Brennerebenen zugeführt wird, dadurch gekennzeichnet, daß
- der Brennstoff mit Verbrennungsluft dem Feuerraum (1) in drei Stufen zugeführt wird,
- der Anteilsquotient in einer dritten Stufe größer ist als in der zweiten Stufe, insbesondere
- der Anteilsquotient in der ersten und zweiten Stufe 0,7 bis 0,9 insbesondere 0,8 bis 0,9 und in der dritten Stufe 1,4 bis 2,0 beträgt.

15. Verfahren nach einem der Ansprüche 1 bis 8, 13 oder 14 für eine Feuerungsanlage mit vier übereinanderliegenden Brennerebenen, dadurch gekennzeichnet, daß Brennstoff in drei Stufen gemäß folgender Tabelle zugeführt wird:

| Stufe | Anzahl der Brennerebenen | Brennstoff/Brennerebene (%) |
|-------|--------------------------|------------------------------|
| 3 | 1 | 15 - 22 |
| 2 | 2 | 18 - 30 |
| 1 | 1 | 25 - 46 |

16. Verfahren nach Anspruch 15, bei dem dem Feuerraum ein Teil der Verbrenungsluft als Oberluft und rezirkuliertes Rauchgas zugeführt wird, dadurch gekennzeichnet, daß 12 bis 20 % der Verbrennungsluft als Oberluft und in den Brennerebenen Brennstoff mit Verbrennungsluft und rezirkuliertes Rauchgas gemäß folgender Tabelle zugeführt wird:

| Stufe | Anzahl der Brenenrebenen | Brennstoff/Brennerebene (%) | Anteilsquotient | Rauchgas/Brennerebene (%) |
|-------|--------------------------|------------------------------|-----------------|----------------------------|
| 3 | 1 | 15 - 20 | 0,82-0,88 | - |
| 2 | 2 | 25 - 30 | 0,82-0,88 | 50 |
| 1 | 1 | 25 - 30 | 0,82-0,88 | - |

17. Verfahren nach Anspruch 15, bei dem dem Feuerraum die gesamte Verbrennungsluft in den Brennerebenen zugeführt wird, dadurch gekennzeichnet, daß Brennstoff und Verbrennungsluft gemäß folgende Tabelle zugeführt wird:

| Stufe | Anzahl der Brennerebenen | Brennstoff/Brennerebene (%) | Anteilsquotient |
|-------|--------------------------|------------------------------|-----------------|
| 3 | 1 | 18 - 22 | 1,43 - 1,82 |
| 2 | 2 | 18 - 22 | 0,82 - 0,88 |
| 1 | 1 | 34 - 46 | 0,82 - 0,88 |

18. Feuerungsanlage zur Verbrennung fossiler Brennstoffe unter reduzierter Bildung von Stickoxiden nach Anspruch 1 oder nach einem auf Anspruch 1 rückbezogenen Anspruch, bei der in einem Feuerraum mehrere Brennerebenen übereinander angeordnet sind, dadurch gekennzeichnet, daß im Feuerraum (1) der Feuerungsanlage zwei Verbrennungszonen: erste Zone (6) und zweite Zone (7) übereinander angeordnet sind und die Brennerebenen (2) der ersten Zone (6) mehr Brenner (13) aufweisen als die Brennerebenen (3, 4) der zweiten Zone (7).

19. Feuerungsanlage zur Verbrennung fossiler Brennstoffe unter reduzierter Bildung von Stickoxiden nach Anspruch 4 oder nach einem auf Anspruch 4 rückbezogenen Anspruch, bei der in einem Feuerraum mehrere Brennerebenen übereinander angeordnet sind, dadurch gekennzeichnet, daß im Feuerraum (1) der Feuerungsanlage zwei Verbrennungszonen: erste Zone (6) und zweite Zone (7) übereinander angeordnet sind und allein die zweite Zone (7) mit Rauchgasrückführungen (16) ausgestattet ist.

20. Feuerungsanlage nach Anspruch 19, dadurch gekennzeichnet, daß die Brennerebenen (2) der ersten Zone (6) mehr Brenner (13) aufweisen als die Brennerebenen (3, 4) der zweiten Zone (7).

21. Feuerungsanlage nach einem der Ansprüche 18 bis 20
- mit einer Verbindungsleitung, die einen Rauchgaskanal mit dem Feuerraum verbindet und
- mit einer Luftleitung, die von einem Luftgebläse über einen Luftvorwärmer zum Feuerraum führt,
dadurch gekennzeichnet, daß

13

- eine Kaltluftleitung (27), die mit einer Dosiervorrichtung (26) versehen ist, an die Verbindungsleitung (23) angeschlossen ist und
- die Kaltluftleitung (27) entweder mit einer Luftöffnung (28) oder über eine zweite Kaltluftleitung (29) zwischen dem Luftgebläse (30) und dem Luftvorwärmer (19) mit der Luftleitung (31) verbunden ist.

22. Feuerungsanlage nach einem der Ansprüche 18 bis 21 mit einer Luftleitung, die von einem Luftgebläse über einen Luftvorwärmer zum Feuerraum führt, dadurch gekennzeichnet, daß
- hinter dem Luftvorwärmer (19) eine Dosiervorrichtung (33) angebracht ist,
- sich zwischen der Dosiervorrichtung (33) und dem Luftvorwärmer (19) eine Abzweigung zu einer Leitung (34) befindet und
- die Leitung (34) mit einer Dosiervorrichtung (35) versehen ist und über einen Wasser-Luft-Kühler (36) hinter der Dosiervorrichtung (33) an die Luftleitung (31) angeschlossen ist.

23. Feuerungsanlage nach einem der Ansprüche 18 bis 22, dadurch gekennzeichnet, daß die zweite Zone zwei übereinander angeordnete Brennerebenen (3) und (4) aufweist.

24. Feuerungsanlage nach einem der Ansprüche 18 bis 23, dadurch gekennzeichnet, daß die Luftzuführungen (9) für Oberluft um 10 bis 20° in Richtung des Feuerraumbodens gegen die Waagerechte geneigt sind.

Figur 1

Figur 2

Figur 3

Figur 4

Figur 5

EP 0 352 470 A2

I

J

5

4

3

2

$t_g$=1300    1500    1600 °C
1400

$t_g$=1300    1500    1600 °C
1400

I

J

13    13    13

13    13    13

13    13    13

13    13    13

Figur 6